# EUROPÄISCHE PATENTSCHRIFT

(11) **EP 0 694 444 B1**
(45) Veröffentlichungstag und Bekanntmachung des Hinweises auf die Patenterteilung: **07.10.1998**
(21) Anmeldenummer: 95110839.8
(22) Anmeldetag: 11.07.1995
(51) Int. Cl.: B60R 21/22

(54) **Airbagvorrichtung**
Air bag device
Système de sac gonflable

(30) Priorität: 28.07.1994 DE 4426848
(43) Veröffentlichungstag der Anmeldung: 31.01.1996
(73) Patentinhaber: HS Technik und Design Technische Entwicklungen GmbH, 82234 Wessling (DE)
(72) Erfinder: Specht, Martin, D-82340 Feldafing (DE)
(74) Vertreter: Nöth, Heinz, Dipl.-Phys.

(56) Entgegenhaltungen:
- DE-A- 3 422 263
- DE-A- 4 320 147
- FR-A- 2 238 343
- GB-A- 2 191 450
- PATENT ABSTRACTS OF JAPAN vol. 16, no. 99 (M-1220), 11.März 1992 & JP-A-03 276844 (MAZDA MOTOR CORP.), 9.Dezember 1991,
- PATENT ABSTRACTS OF JAPAN vol. 950, no. 5 & JP-A-07 117605 (HONDA MOTOR CO LTD)

## Beschreibung

Die Erfindung betrifft eine Airbagvorrichtung nach dem Oberbegriff des Patentanspruches 1.

Aus der GB-A-2 191 450 ist eine derartige Airbagvorrichtung bekannt geworden, die zumindest einen flexiblen Schlauch als aufblasbaren Airbag aufweist, der im Fahrzeuginnenraum im Bereich des Fensterrahmens befestigt ist und durch einen Gasgenerator aufblasbar ist. Hierzu erstreckt sich der aufblasbare Schlauch entlang der A-Säule, dem oberen Türholmteil und an der B-Säule abwärts. Ein Gasgenerator ist mit dem Schlauch verbunden, um ihn mit Füllgas zu versorgen. In dem nichtaufgeblasenen Zustand ist der Schlauch zuammengefaltet und von einer aufreißbaren Abdeckung zum Fahrzeuginnenraum hin begrenzt. Das vom Gasgenerator, der aufgrund der Einbausituation üblicherweise an einem Ende des länglichen Airbags angebracht ist, erzeugte Druck-oder Füllgas muß sich daher seinen Weg durch den von dem gefalteten Airbag verlegten Querschnitt bahnen und dabei den Airbag aufblasen. Der Airbag füllt sich dabei sukzessive über die gesamte Länge und bläht sich gegen den Aufreißwiderstand der Abdeckung auf. Dies führt zwangsläufig zu einem deutlich verzögerten Aufblasen der vom Gasgenerator entfernteren Bereiche des Schlauchs bzw. Airbags.

Aus der FR-A-2 238 343 ist eine Schutzvorrichtung für Fahrzeuginsassen bekannt geworden, die mehrere aufblasbare Gassäcke oder Airbags an Bereichen des Fahrzeuginnenraumes aufweist, an denen sich ein Fahrzeuginsasse bei einem Aufprall verletzen könnte, wie z. B. die Sonnenblende oder Karosserieholme. Gemäß einem Ausführungsbeispiel ist der Airbag mit einer Anzahl von Faltungen in einer Sonnenblende untergebracht wobei der obere Rand des Airbags mit einem geeigneten Befestigungsmittel fest an dem Rahmen der Sonnenblende befestigt ist und der gegenüberliegende Rand und die Seitenränder mit Clips oder dergleichen am Rahmen befestigt sind. Innerhalb des Airbags ist ein Gasgenerator mit Befestigungsmitteln in Position gehalten. Der Gasgenerator weist eine zylindrische, stabförmige Umhüllung aus Textilmaterial auf, die eine Propergolfolie umgibt, welche wiederum ein das Füllgas erzeugendes Sprengpulver einschließt. Ein Ende des stabförmigen Gehäuses ist mit einer Zündeinrichtung verbunden. Das gegenüberliegende Ende enthält eine zylindrische Verlängerung mit voneinander beabstandeten Öffnungen, um eine gute Verteilung des erzeugten Gases zu ermöglichen.

Der Erfindung liegt die Aufgabe zugrunde, eine gattungsgemäße Airbagvorrichtung im Hinblick auf eine schnelle Befüllung zu verbessern.

Erfindungsgemäß wird diese Aufgabe durch die kennzeichnenden Merkmale des Patentanspruchs 1 gelöst. Vorteilhafte Ausgestaltungen der Erfindung sind in den abhängigen Ansprüchen angegeben.

Die Größe des bevorzugt schlauchförmigen Airbags kann so bemessen werden, daß alle aufprallgefährdeten Rahmenteile überdeckt sind und ein direkter Kontakt mit dem Fahrgast im Crashfall verhindert wird.

Das Ansprechverhalten wird durch die Verwendung mehrerer Gaserzeugungseinrichtungen wesentlich verbessert, die entlang des Airbags verteilt angeordnet sind.

Bei einem schlauchförmigen Airbag kann die Befüllung an den beiden Schlauchenden erfolgen.

Eine bevorzugte Möglichkeit zur Gaserzeugung ist die Verwendung einer Sprengschnur, die parallel zum Airbag angeordnet ist.

Hierbei kann die Zündung an den Zwei Schnurenden erfolgen, um das Ansprechverhalten weiter zu verbessern. Bei der Verwendung von ausreichend intelligenten Sensoren und/oder Elektronik kam die Zündung bzw. die Befüllung an der Seite des Airbags beginnen, die mit der Richtung, in der die größere Beschleunigung wirkt, übereinstimmt.

Als Airbagmaterial können bekannte elastische, stoßabsorbierende Kunststoffe verwendet werden, die ihre Eigenschaften auch bei höheren Temperaturen behalten und nicht brennbar sind.

Für die Zündung des/der Airbags können bevorzugt gedeckte Stupinen als Zündschnüre verwendet werden.

Es besteht auch die Möglichkeit, an den Rahmenteilen, an denen der Airbag befestigt ist, Gasführungen vorzusehen, durch die das Gas vom Gasgenerator in den Airbag gelangen kann.

Nachfolgend soll die Erfindung bei weiteren Ausführungsbeispielen näher erläutert werden. Der eine langgestreckte Form, z.B. Schlauchform, aufweisende Airbag erstreckt sich entlang dem oberen Türrahmenteil, insbesondere an den beiden Vordertüren, kann jedoch auch an den beiden hinteren Türen einer Fahrzeugkarosserie vorgesehen sein. Zur Erzeugung des Fülldruckes im Airbaginnenraum ist ein dem Verlauf des Türrahmenteils angepaßtes Rohr, in welchem ein Füllgas mit bestimmten Druck erzeugt wird, im Airbaginnenraum angeordnet sein. Das Rohr ist in bevorzugter Weise so ausgebildet, daß es auf das erzeugte Füllgas zunächst eine Dämmwirkung ausübt und sich dann nach Aufbau eines bestimmten Füllgasdruckes im Rohrinnern in den Airbaginnenraum öffnet. Dies kann bei wird durch eine oder mehrere Sollbruchstellen in der Rohrwandung erreicht.

Zur Bildung einer Airbagbaueinheit können zwei Längskanten des Airbagmantelgewebes mit dem Rohr in sich in Längsrichtung des Rohres erstreckenden Nähten vernäht sein. Bevorzugt ist hierzu in Form eines Nähfalzes an das Rohr ein Vorsprung angeformt, der sich in Längsrichtung des Rohres erstreckt. Um die Vernähung mit dem Mantelgewebe des Airbags zu ermöglichen, kann der Nähfalz aus einem weicheren Material bestehen als das die Dämmwirkung erzielende Rohrmaterial. Das Rohr und der angeformte Nähfalz können als Endlosprofil aus Kunststoff, insbesondere zwei Kunststoffkomponenten, gefertigt werden.

Zur Erzeugung des Fülldruckes können an beiden Enden des Rohres Gasgeneratoren vorgesehen sein, welche zur Erzielung eines schnellen Abbrandes als Seelenbrenner ausgebildet sein können.

Zur Verankerung der aus dem gefalteten Airbag und dem Rohr bestehenden Airbagbaueinheit können mechanische Befestigungsmittel, beispielsweise in Form von Halteklammern oder Halteblechen, vorgesehen sein, die an der Befestigungsstelle der als Keder ausgebildeten Klemmeinrichtung am Fahrzeugbaufbau zwischen einem Befestigungsteil am Keder und einem zugeordneten Befestigungsteil an der Fahrzeugkarosserie mit Formschluß eingelegt werden. Das bzw. die mechanischen Halteteile in Form der Haltebleche oder Halteklammern sind bevorzugt im Bereich des Nähfalzes mit der Airbagbaueinheit verbunden. Sie können dort mitvernäht sein oder in den Nähfalz eingegossen sein oder auf den mit dem Airbagmantelgewebe vernähten Nähfalz von außen aufgepreßt sein.

Anhand der Figuren wird an Ausführungsbeispielen die Erfindung noch näher erläutert. Es zeigt:
- Fig. 1:: eine schematische Darstellung eines ersten Ausführungsbeispiels einer Airbagvorrichtung am Rahmen einer Fahrzeugtür;
- Fig. 2:: ein zweites Ausführungsbeispiel;
- Fig. 3:: eine Schnittdarstellung einer ersten Ausführungsform für das Ausführungsbeispiel der Figur 1;
- Fig. 4:: ein Ausführungsbeispiel einer für den Einbau fertigen Airbagbaueinheit.
- Fig. 5:: ein weiteres Ausführungsbeispiel mit gefülltem Airbag;
- Fig. 6:: eine aus Rohr und gefaltetem Airbagmantelgewebe bestehende Airbagbaueinheit;
- Fig. 7:: eine erste Einbauausführungsform der Airbagbaueinheit, kombiniert mit einem an der Fahrzeugkarosserie zu befestigenden Keder;
- Fig. 8:: eine zweite Einbauausführungsform einer mit dem Keder kombinierten Airbagbaueinheit, welche an einem Karosserieteil befestigt ist;
- Fig. 9:: eine erste Ausführungsform für die Befestigung eines mechanischen Halteteils an der Airbagbaueinheit;
- Fig. 10:: eine zweite Befestigungsmöglichkeit für ein mechanisches Halteteil an der Airbagbaueinheit; und
- Fig. 11 A und B:: Ausführungsformen für die Befestigung des Halteteils an der Airbagbaueinheit.

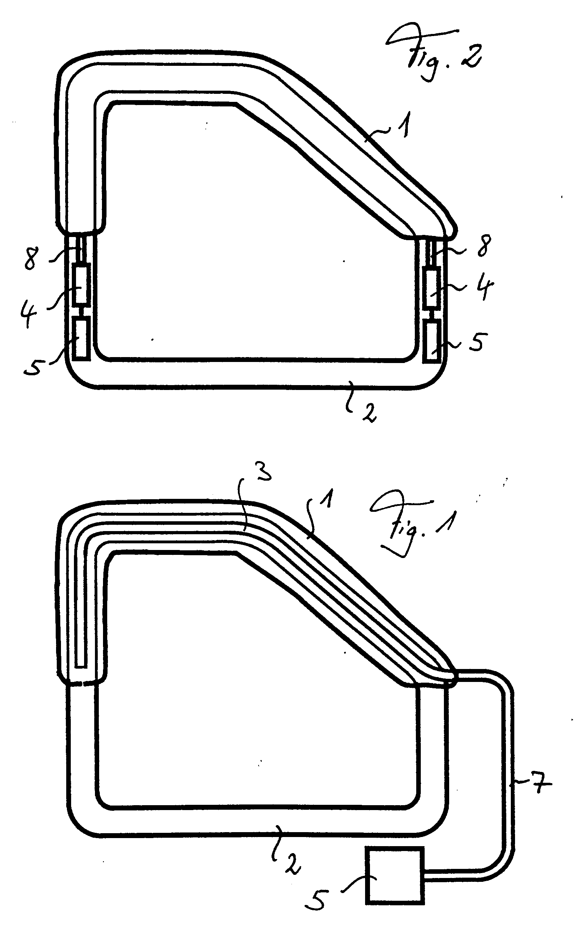

In der Fig. 1 ist eine Airbagvorrichtung als Aufprallschutz an einem Türrahmen T einer Fahrzeugtür vorgesehen. Am Rahmen 2 der Tür ist in deren aufprallgefährdeten Bereich ein Airbag 1 angeordnet, der in der Darstellung der Fig. 1 gefüllt ist. Anstelle des einteiligen Airbags können auch mehrere nebeneinander angeordnete Airbags 1 mit jeweils zugeordneten Gasgeneratoren verwendet werden.

Die Zündung des bzw. der Gasgeneratoren erfolgt durch Ansprechen eines Sensors 5.

Im Ausführungsbeispiel der Fig. 1 ist als Gasgenerator entlang des aufprallgefährdeten Bereiches des Rahmens 2 im wesentlichen parallel zum etwa schlauchförmigen Airbag 1 eine Sprengschnur 3 angeordnet, welche mittels einer Zündschnur 7 gezündet wird. Die Zündschnur 7 kann als gedeckte Stupine ausgebildet sein. Die Sprengschnur 3 kann auch an ihren beiden Enden durch zwei Zündschnüre 7 gezündet werden.

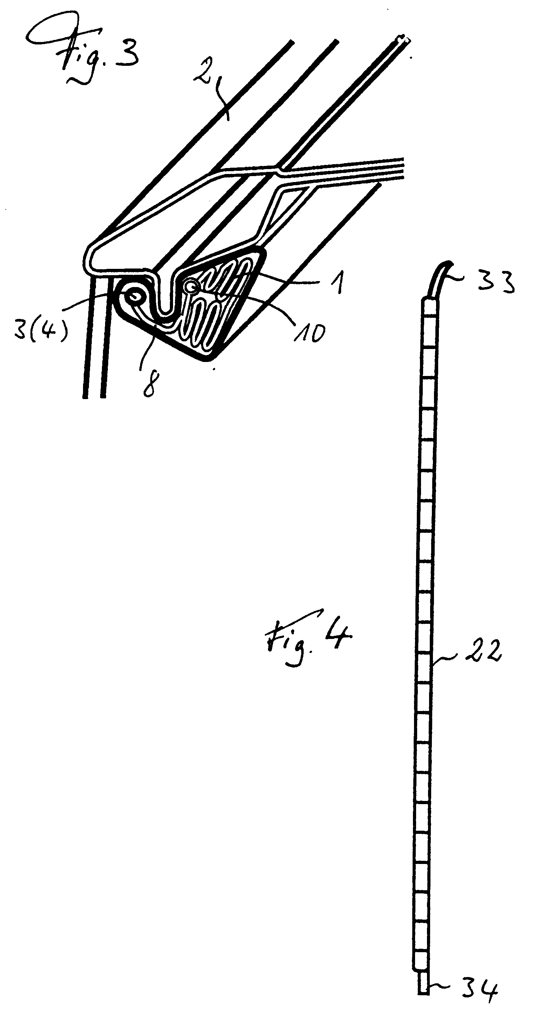

Zur Gaserzeugung kann jedoch auch anstelle der Sprengschnur 3 ein herkömmlicher Gasgenerator 4 verwendet werden, der ebenfalls in bekannter Weise mittels des Sensors 5 gezündet wird (Fig. 2). Über eine Gasführung 8, die am Rahmen 2 geführt ist, wird das Füllgas dem Airbag 1 zugeführt. Es können auch an beiden Enden des Airbags 1 Gasgeneratoren 4 zur Füllung vorgesehen sein.

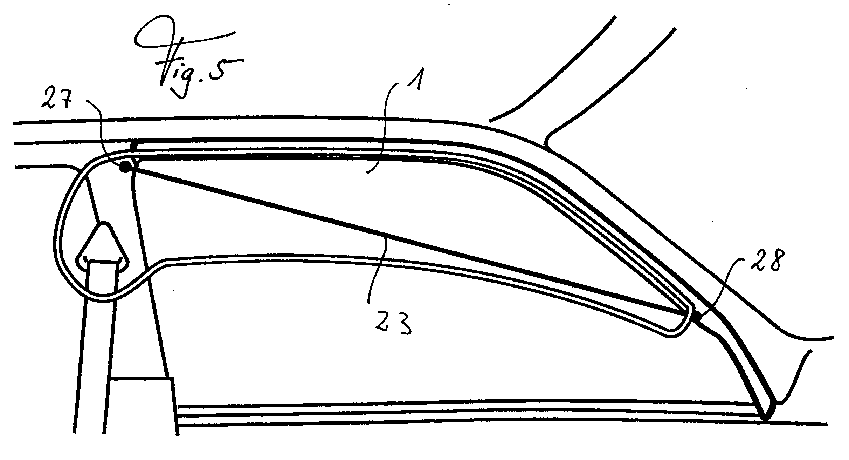

Der Fig. 3 ist eine mögliche Befestigung des Airbags 1 am Rahmen 2 mit einem Keder 6 zu entnehmen. Dabei klemmt der Keder 6 am Rahmen 2 fest. Der nicht aufgeblähte Airbag 1 ist aus dekorativen Gründen in Richtung Fahrzeuginnenraum verdeckt. Zwischen Sprengschnur 3 und gefaltetem Airbag 1 ist die Gasführung 8 vorgesehen. Der Austritt des Gases in den Airbag 1 erfolgt über einen Diffusor 10.

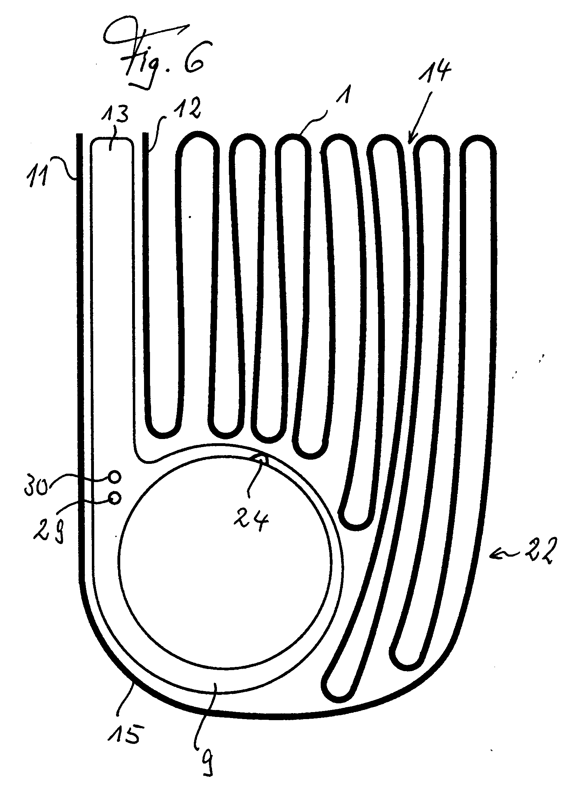

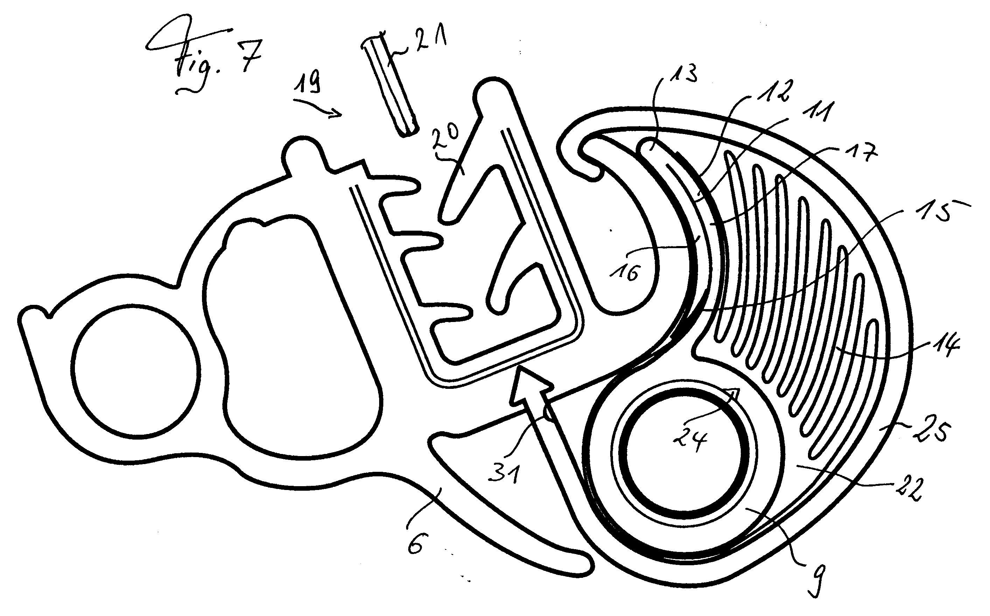

Bei dem in der Fig. 5 dargestellten Ausführungsbeispiel eines Airbags 1, der im gefüllten Zustand dargestellt ist, erstreckt sich im unteren Teil des gefüllten Airbagmantelgewebes, insbesondere im Bereich des Umbuges, eine Stabilisierungskordel 23, welche von einem hoch-reißfesten Seil gebildet wird. Die Stabilisierungskordel 23 ist mit dem Mantelgewebe des Airbags 1 vernäht. Insbesondere bei ausgebrochener oder geöffneter Fensterscheibe in der Fahrzeugtür wird durch die Stabilisierungskordel 23 eine zusätzliche Stabilisierung des Airbags beim Auffangen des Kopfes des Fahrzeuginsassen während eines Unfallgeschehens erreicht. Die Verankerung der Stabilisierungskordel 23 erfolgt an Verankerungsstellen 27 und 28 an der Fahrzeugkarosserie, beispielsweise an der A- und B-Säule für einen im Bereich der Vordertür des Kraftfahrzeuges angeordneten Airbag.

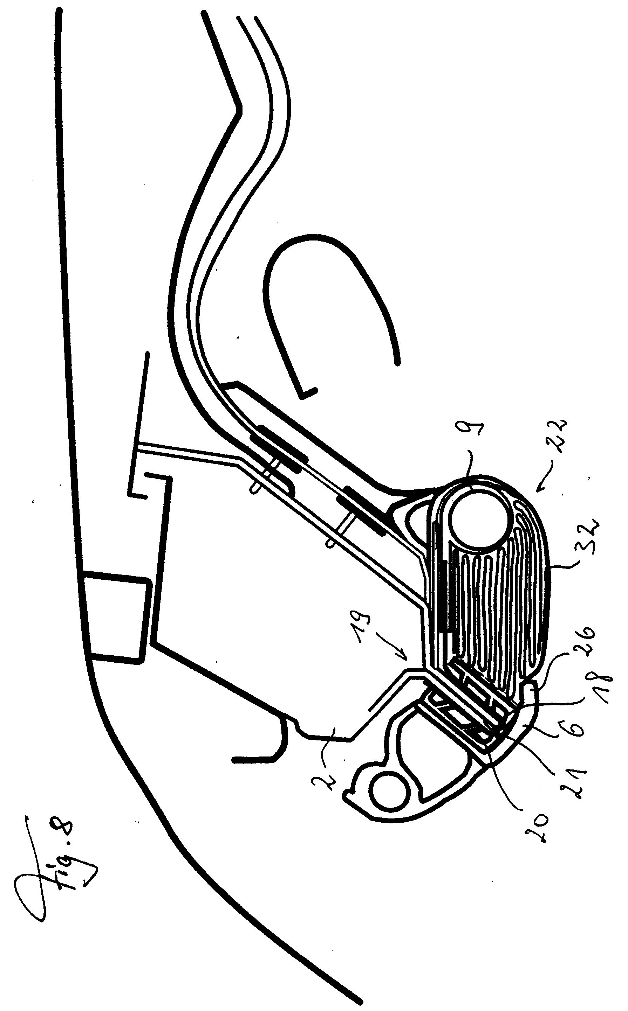

Im gefalteten Zustand kann der Airbag eine langgestreckte Form, insbesondere Schlauchform, aufweisen, wie sie in der Fig. 4 dargestellt ist. Beim Einbau in die Fahrzeugkarosserie erstreckt sich der Airbag 1 entlang dem Karosserieteil, welcher bevorzugt bei einer jeweiligen Fahrzeugtür der obere Türrahmenteil ist, wie es aus den Figuren 1, 2 und 5 zu ersehen ist. Der Airbag 1 ist Bestandteil einer Airbagbaueinheit 22, von welcher in den Figuren 6 bis 10 Ausführungsbeispiele dargestellt sind. Überstehende Enden 33, 34 der Stabilisierungskordel 23 werden an der Karosserie verankert.

Die Airbagbaueinheit 22 des jeweiligen Ausführungsbeispiels besitzt ein Rohr 9, welches aus einem biegbaren Material, insbesondere Kunststoffmaterial, als Endlosprofil hergestellt ist. Das Rohr 9 ist aus einem Material hergestellt, welches auf den in ihm erzeugten Füllgasdruck eine Dämmwirkung ausübt. Diese Dämmwirkung gewährleistet, daß nach dem Zünden des das Füllgas erzeugenden Treibsatzes sich ein bestimmter Füllgasdruck im Innern des Rohres 9 aufbaut. Wenn dieser Druck erreicht ist, öffnet sich eine oder mehrere Sollbruchstellen 24 im Mantel des Rohres 9. Der Füllgasdruck füllt dann den Airbag 1.

Im in der Fig. 6 dargestellten Zustand ist das Airbagmantelgewebe gefaltet (Faltung 14). Die Falten der Faltung 14 verlaufen parallel zum Rohr 9 und erstrecken sich über die Rohrlänge. Eine Außenfalte 15 des Airbagmantelgewebes ist um das Paket des gefalteten Airbags 1 und um das Rohr 9 gelegt. An ihrer Längskante 11 ist die Außenfalte 15 des Airbagmantelgewebes mit dem Rohr 9 im Bereich eines angeformten Nähfalzes 13 vernäht. Ferner ist eine innen liegende Längskante 12 einer innen liegenden Falte der Faltung 14 mit dem Nähfalz 13 vernäht. Auf diese Weise gewinnt man einen geschlossenen Airbaginnenraum, in welchem das Rohr 9 angeordnet ist. Der Nähfalz 13 kann aus einem weicheren Material bestehen als das Rohr 9, damit seine Vernähbarkeit mit den beiden Längskanten 11 und 12 des Airbagmantelgewebes möglich ist. Das Vernähen des Airbagmantelgewebes entlang der Längskanten 11 und 12 erfolgt zu beiden Seiten des Nähfalzes 13.

Zum Aufbau eines Fülldruckes sind an beiden Enden des Rohres 9 Gasgeneratoren vorgesehen, welche für einen schnellen Abbrand des Treibmittels zum Aufbau eines ausreichenden Füllgasdruckes als Seelenbrenner ausgebildet sind. Nach Überwindung der vom Rohr 9 ausgeübten Dämmwirkung öffnet sich die Sollbruchstelle 24 in das Airbaginnere, so daß der Airbagmantel gefüllt wird. Die Sollbruchstelle 24 kann eine sich in der Länge des Rohres 9 ausdehnende Kerbe sein.

Die Zündung der beiden Gasgeneratoren kann elektrisch über in das Rohr 9 eingegossene elektrische Zuleitungen 29 und 30 erfolgen.

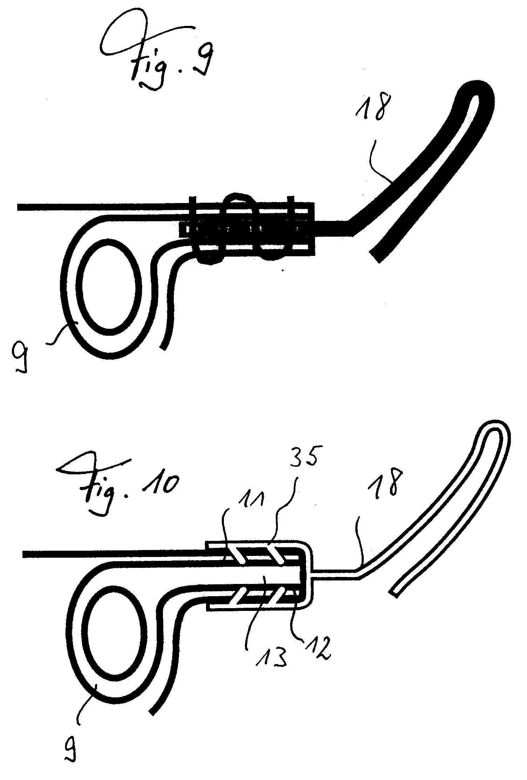

Die Fig. 7 zeigt eine Ausführungsform für den Einbau der Airbagbaueinheit 22 in Kombination mit dem am Fahrzeugrahmen zu befestigenden Keder 6. Bei dieser Ausführungsform ist der Nähfalz 13 umgeklappt. Der umgeklappte Nähfalz 13 besteht aus zwei Nähfalzteilen 16 und 17, nämlich einem äußeren Nähfalzteil 16 und einem inneren Nähfalzteil 17. Die Langskante 11 der Außenfalte 15 des Airbagmantelgewebes befindet sich zwischen den beiden Nähfalzteilen 16 und 17 (Fig. 7). Hierdurch wird eine Verklebbarkeit der Airbagbaueinheit 22 mit dem Kunststoffmaterial des Keders 6 ermöglicht, da das normalerweise aus nicht verklebbarem Material (Nylongewebe) bestehende Airbagmantelgewebe durch das äußere Nähfalzteil 16 abgedeckt ist. Das äußere Nähfalzteil 16 kann dann mit dem Material des Keders 6 verliebt werden. Das Vernähen erfolgt bei umgeklapptem äußeren Nähfalzteil 16, wobei, wie schon erläutert, die Längskante 11 der Außenfalte 15 zwischen den beiden Nähfalzteilen 16 und 17 gehalten ist und die Längskante 12 der inneren Falte am Nähfalzteil 17 anliegt.

Bei dem in der Fig. 7 dargestellten Ausführungsbeispiel kann zur zusätzlichen Stützung der Airbagbaueinheit 22 an das Längsprofil des Keders 6 eine Hülle 25 ebenfalls als Längsprofil angeformt sein. Für den Einbau verbleibt die Hülle 25 dann nur in dem Bereich, in welchem die Airbagbaueinheit 22 vorgesehen ist. Am übrigen Teil des Längsprofils des Keders 6 kann beispielsweise mit Hilfe einer Schwachstelle 31 am Übergang zwischen der Hülle 25 und dem Material des Keders 6 das überflüssige Material der Hülle 25 entfernt sein. Das Hüllenmaterial kann so ausgebildet sein, daß es gegenüber dem Fülldruck beim Füllen des Airbags nachgibt, so daß dieser sich in den Fahrzeuginnenraum ausbreiten kann.

An der Fahrzeugkarosserie wird dann die Kombination aus Keder 6 und Airbagbaueinheit 22 an einer Befestigungsstelle 19 an der Fahrzeugkarosserie befestigt. Diese Befestigungsstelle kann gebildet werden von einem am Keder 6 vorgesehenen Befestigungsteil 20 und einem an der Fahrzeugkarosserie zugeordneten Befestigungsteil 21. Durch die Befestigungsteile 20 und 21 wird eine Klemmverbindung an der Kederbefestigungsstelle 19 gebildet.

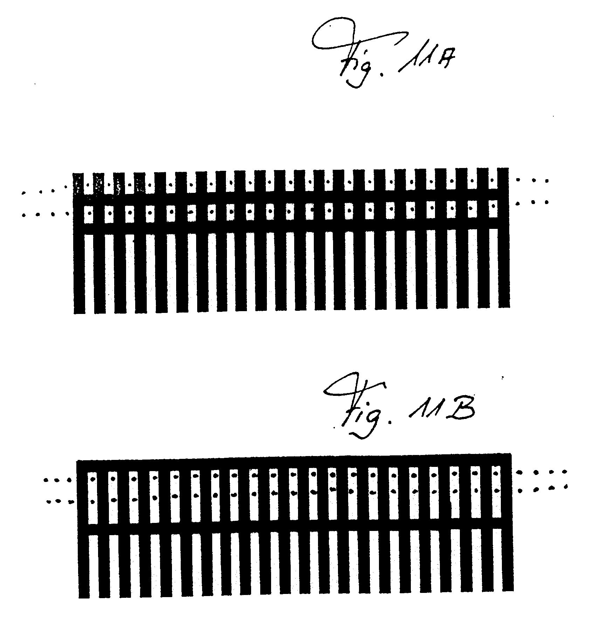

Bei dem in der Fig. 8 dargestellten Ausführungsbeispiel erfolgt die Befestigung der Airbagbaueinheit 22 mit Hilfe eines oder mehrerer Halteteile 18, die einerseits mit der Airbagbaueinheit 22, wie noch näher erläutert wird, fest verbunden sind, und andererseits an der Kederbefestigungsstelle 19 zwischen das Befestigungsteil 20 am Keder und das Befestigungsteil 21 an der Fahrzeugkarosserie mit Formschluß eingelegt wird bzw. werden. Es kann ein an die Befestigungsteile 20, 21 in seiner Form angepaßtes mechanisches Halteteil 18, beispielsweise in Form eines Haltebleches, vorgesehen sein. Um das Halteblech biegbar zu gestalten, kann dieses die Form eines Zaunes oder Kammes, wie es in den Figuren 11A und 11B dargestellt ist, ausgebildet sein. Diese Haltebleche können in ihrer Längsausdehnung sich an einen gebogenen Verlauf des Befestigungsteils 21 an der Karosserie anpassen.

Es ist jedoch auch möglich, anstelle eines speziell geformten Haltebleches mehrere mechanische Halteteile, beispielsweise in Form von Klammern, deren Querschnitt ebenfalls die in der Fig. 8 gezeigte Form im Bereich der Befestigungsstelle 19 haben, zu verwenden.

Die Verbindung des Halteteils 18 mit der Airbagbaueinheit 22 kann in der Weise erfolgen, wie es beispielsweise in den Figuren 9 und 10 dargestellt ist. Das Halteteil 18 kann mit Hilfe eines Klammereingriffes 35 auf den Nähfalz 13, mit welchem die Längskanten 11 und 12 des Airbagmantelgewebes vernäht sind, aufgepreßt sein. Es ist jedoch auch möglich, daß das mit dem Nähfalz 13 zu verbindende Ende des Halteteils 18 zusammen mit den Längskanten 11 und 12 des Airbagmantelgewebes mitvernäht ist. Ferner kann, wie es die Fig. 10 zeigt, das mit dem Nähfalz zu verbindende Ende des Halteteils 18 in das Kunststoffmaterial des Nähfalzes 13 eingegossen sein (Fig. 10). Der die Nähte bildende Faden ist dann durch entsprechende Öffnungen im Halteteil 18 hindurchgeführt.

Die Airbagbaueinheit 22 kann mit einer zusätzlichen Hülle 32 versehen sein (siehe Fig. 8). Für die zusätzliche Abstützung der Airbagbaueinheit 22 an der Fahrzeugkarosserie kann an den Keder eine Stütze 26 angeformt sein, welche die Airbagbaueinheit 22, welche von der zusätzlichen Hülle 32 umfaßt ist, in die gewünschte Position am Fahrzeugkarosserieteil hält.

## Patentansprüche

1. Airbagvorrichtung für ein Kraftfahrzeug mit
- wenigstens einem Gasgenerator (4) zum Erzeugen eines Füllgases; und
- einem mit dem Füllgas aufblasbaren Airbag (1), der im gefalteten Zustand in langgestreckter Form sich entlang dem oberen Türrahmenteil (2) im Fahrgastraum des Kraftfahrzeugs erstreckt und mittels einer Klemmvorrichtung gehalten ist,
dadurch **gekennzeichnet,** daß
- zur Verteilung des Füllgasdruckes ein dem Verlauf des oberen Türrahmenteils (2) angepaßtes und an den wenigstens einen Gasgenerator (4) angeschlossenes festes Rohr (9, 10), im Airbaginnenraum angeordnet ist und daß das Rohr in seiner Wandung längs verteilte Sollbruchstellen, z.B. Kerben (24) aufweist, durch die das Füllgas nach Erreichen eines bestimmten Drucks in den Airbag (1) strömt.

2. Airbagvorrichtung nach Anspruch 1, dadurch gekennzeichnet, daß der gefaltete Airbag (1) und das Rohr (9) eine Airbagbaueinheit (22) bilden, welche von einer zusätzlichen Hülle (32) umfaßt ist.

3. Airbagvorrichtung nach Anspruch 1 oder 2, dadurch gekennzeichnet, daß das Rohr (9) am Mantelgewebe des Airbags (1) festgenäht ist.

4. Airbagvorrichtung nach Anspruch 3, dadurch gekennzeichnet, daß zwei Längskanten (11, 12) des Airbags (1) mit dem Rohr (9) in sich in Längsrichtung des Rohres (9) erstreckenden Nähten vernäht sind.

5. Airbagvorrichtung nach einem der Ansprüche 1 bis 4, dadurch gekennzeichnet, daß die Faltung (14) des Airbags (11) parallel zum Rohr (9; 10) verläuft und daß eine Außenfalte (15) des Airbagmantelgewebes um das Paket des gefalteten Airbags (11) gelegt ist und an ihrer Längskante eine der beiden mit dem Rohr (9) vernähten Längskanten (11, 12) bildet.

6. Airbagvorrichtung nach einem der Ansprüche 1 bis 5, dadurch gekennzeichnet, daß die beiden Längskanten (11, 12) des Airbagmantelgewebes mit einem an das Rohr (9) angeformten Nähfalz (13) vernäht sind.

7. Airbagvorrichtung nach Anspruch 6, dadurch gekennzeichnet, daß der Nähfalz (13) in seiner Länge umgeklappt ist und daß eine der beiden Längskanten (11, 12) des Airbagmantelgewebes zwischen die beiden Nähfalzteile (16, 17) gelegt ist.

8. Airbagvorrichtung nach Anspruch 7, dadurch gekennzeichnet, daß der äußere umgeklappte Nähfalzteil (16) mit der Klemmeinrichtung (6) verklebt ist.

9. Airbagvorrichtung nach einem der Ansprüche 1 bis 8, dadurch gekennzeichnet, daß die aus dem Rohr (9) und dem gefalteten Airbag (1) bestehende Airbagbaueinheit (22) mitteils eines oder mehrerer Halteteile (18), welches bzw. welche an einer Kederbefestigungsstelle (19) zwischen einem Befestigungsteil (20) an der Klemmeinrichtung (6) und einem Befestigungsteil (21) an der Fahrzeugkarosserie mit Formschluß eingelegt ist bzw. sind, befestigt ist.

10. Airbagvorrichtung nach Anspruch 9, dadurch gekennzeichnet, daß das bzw. die mechanischen Halteteile (18) im Bereich des Nähfalzes (13) an der Airbagbaueinheit (22) befestigt ist bzw. sind.

11. Airbagvorrichtung nach Anspruch 9 oder 10, dadurch gekennzeichnet, daß das bzw. die mechanischen Halteteile (18) den Nähfalz (13) und die damit vernähten Längskanten (11, 12) des Airbagmantelgewebes aufgepreßt ist bzw. sind.

12. Airbagvorrichtung nach einem der Ansprüche 9 oder 10, dadurch gekennzeichnet, daß das bzw. die mechanischen Halteteile (18) am Nähfalz (13) mit den Längskanten (11, 12) des Airbagmantelgewebes mitvernäht sind.

13. Airbagvorrichtung nach einem der Ansprüche 9 bis 12, dadurch gekennzeichnet, daß das Halteteil (18) als Halteblech oder -klammer ausgebildet ist.

14. Airbagvorrichtung nach einem der Ansprüche 1 bis 13, dadurch gekennzeichnet, daß im Bereich des Umbuges des Airbagmantelgewebes eine hoch-reißfeste Stabilisierungskordel (23) vorgesehen ist, die mit ihren überstehenden Enden an der Fahrzeugkarosserie verankert ist.

15. Airbagvorrichtung nach einem der Ansprüche 1 bis 14, dadurch gekennzeichnet, daß für die Airbagbaueinheit (22) an die Klemmeinrichtung (6) eine mechanische Stütze (25; 26) angeformt ist.

16. Airbagvorrichtung nach einem der Ansprüche 1 bis 15, dadurch gekennzeichnet, daß die an die Klemmeinrichtung (6) angeformte Stütze als eine die eingebaute Airbagbaueinheit (22) umfassende Hülle (25) ausgebildet ist.

17. Airbagvorrichtung nach Anspruch 1, dadurch gekennzeichnet, daß die Zündmittel für den Gasgenerator (4) gedeckte Stupinen sind.

## Claims

1. An airbag device for a motor vehicle comprising
- at least one gas generator (4) for producing a filling gas; and
- an airbag (1) which is inflatable with the filling gas and which in the folded condition extends in elongated form along the upper door frame portion (2) in the passenger compartment of the motor vehicle and is held by means of a clamping device,
characterised in that
- for distribution of the filling gas pressure a fixed tube (9, 10) which is adapted to the configuration of the upper door frame portion (2) and which is connected to the at least one gas generator (4) is arranged in the interior of the airbag and that the tube has desired-rupture locations, for example notches (24), distributed longitudinally in its wall, through which the filling gas flows into the airbag (1) after the attainment of a given pressure.

2. An airbag device according to claim 1 characterised in that the folded airbag (1) and the tube (9) form an airbag unit (22) which is enclosed by an additional sheath (32).

3. An airbag device according to claim 1 or claim 2 characterised in that the tube (1) is sewn fast to the casing fabric of the airbag (1).

4. An airbag device according to claim 3 characterised in that two longitudinal edges (11, 12) of the airbag (1) are sewn to the tube (9) in seams extending in the longitudinal direction of the tube (9).

5. An airbag device according to one of claims 1 to 4 characterised in that the folding (14) of the airbag (11) extends parallel to the tube (9; 10) and that an outer fold (15) of the airbag casing fabric is laid around the pack of the folded airbag (11) and at its longitudinal edge forms one of the two longitudinal edges (11, 12) which are sewn to the tube (9).

6. An airbag device according to one of claims 1 to 5 characterised in that the two longitudinal edges (11, 12) of the airbag casing fabric are sewn to a sewing lip (13) which is formed on the tube (9).

7. An airbag device according to claim 6 characterised in that the sewing lip (13) is folded over in its length and that one of the two longitudinal edges (11, 12) of the airbag casing fabric is laid between the two sewing lip portions (16, 17).

8. An airbag device according to claim 7 characterised in that the outer folded-over sewing lip portion (16) is glued to the clamping device (6).

9. An airbag device according to one of claims 1 to 8 characterised in that the airbag unit (22) comprising the tube (9) and the folded airbag (1) is fixed by means of one or more holding portions (18) which is or are inserted in positively locking relationship at a strip fixing location (19) between a fixing portion (20) at the clamping device (6) and a fixing portion (21) at the vehicle body.

10. An airbag device according to claim 19 characterised in that the mechanical holding portion or portions (18) is or are fixed in the region of the sewing lip (13) to the airbag unit (22).

11. An airbag device according to claim 9 or claim 10 characterised in that the mechanical holding portion or portions (18) is or are pressed on to the sewing lip (13) and the longitudinal edges (11, 12) of the airbag casing fabric, which are sewn thereto.

12. An airbag device according to one of claims 9 and 10 characterised in that the mechanical holding portion or portions (18) are also sewn to the sewing lip (13) with the longitudinal edges (11, 12) of the airbag casing fabric.

13. An airbag device according to one of claims 9 to 12 characterised in that the holding portion (18) is in the form of a holding plate or clip.

14. An airbag device according to one of claims 1 to 13 characterised in that provided in the region of the periphery of the airbag casing fabric is a stabilisation cord (23) of high tensile strength, which is anchored by its projecting ends to the vehicle body.

15. An airbag device according to one of claims 1 to 14 characterised in that a mechanical support (25; 26) is formed on the clamping device (6) for the airbag unit (22).

16. An airbag device according to one of claims 1 to 15 characterised in that the support which is formed on the clamping device is in the form of a sheath (25) which encloses the installed airbag unit (22).

17. An airbag device according to claim 1 characterised in that the firing means for the gas generator (4) are concealed firing cords.

## Revendications

1. Système d'Airbag pour un véhicule avec
- au moins un générateur de gaz (4) pour produire un gaz de remplissage, et avec
- un Airbag gonflable (1) par le gaz de remplissage, qui s'étend à l'état de pliage, sous une forme allongée, le long de la partie supérieure (2) du cadre de portière dans l'habitacle du véhicule, et est maintenu au moyen d'un dispositif de serrage,
caractérisé en ce qu'un tube fixe (9, 10), adapté à l'allure de la partie supérieure (2) du cadre de portière et relié au générateur de gaz (4), au moins, est disposé dans l'espace interne de l'Airbag pour répartir la pression du gaz de remplissage, et en ce que le tube présente dans sa paroi des points de rupture répartis en longueur, des entailles (24) par exemple, au travers desquels le gaz de remplissage s'échappe dans l'Airbag après l'obtention d'une pression donnée.

2. Système d'Airbag suivant la revendication 1, caractérisé en ce que l'Airbag plié (1) et le tube (9) forment un composant d'Airbag (22), enveloppé par une gaine (32) supplémentaire.

3. Système d'Airbag suivant l'une des revendications 1 et 2, caractérisé en ce que le tube (9) est cousu sur le tissu d'enveloppe de l'Airbag (1).

4. Système d'Airbag suivant la revendication 3, caractérisé en ce que deux bords longitudinaux (11, 12) de l'Airbag (1) sont assemblés avec le tube (9) par des coutures s'étendant dans le sens longitudinal du tube (9).

5. Système d'Airbag suivant l'une des revendications 1 à 4, caractérisé en ce que le pliage (14) de l'Airbag (11) s'étend parallèlement au tube (9 ; 10), et en ce qu'un pli externe (15) du tissu d'enveloppe de l'Airbag est placé autour du paquet de l'Airbag (11) plié, et forme sur son bord longitudinal l'un des deux bords longitudinaux (11, 12), cousus avec le tube (9).

6. Système d'Airbag suivant l'une des revendications 1 à 5, caractérisé en ce que les deux bords longitudinaux (11, 12) du tissu d'enveloppe de l'Airbag sont cousus avec un pli de couture (13), conformé sur le tube (9).

7. Système d'Airbag suivant la revendication 6, caractérisé en ce que le pli de couture (13) est rabattu sur sa longueur, et en ce qu'un des deux bords longitudinaux (11, 12) du tissu d'enveloppe de l'Airbag est placé entre les deux parties (16, 17) du pli de couture.

8. Système d'Airbag suivant la revendication 7, caractérisé en ce que la partie externe du pli de couture (16) rabattue est collée avec le dispositif de serrage (6).

9. Système d'Airbag suivant l'une des revendications 1 à 8, caractérisé en ce que le composant d'Airbag (22), composé du tube (9) et de l'Airbag plié (1), est fixé au moyen d'un ou de plusieurs éléments de retenue (18), qui est et/ou sont insérés par force mécanique en un point de fixation (19) du bourrelet, entre un élément de fixation (20) sur le dispositif de serrage (6) et un élément de fixation (21) sur la carrosserie du véhicule.

10. Système d'Airbag suivant la revendication 9, caractérisé en ce que le et/ou les éléments de retenue mécaniques (18) est et/ou sont fixés dans la zone du pli de couture (13) sur le composant d'Airbag (22).

11. Système d'Airbag suivant l'une des revendications 9 et 10, caractérisé en ce que le et/ou les éléments de retenue mécaniques (18) est et /ou sont emmanchés sur le pli de couture (13) et sur les bords longitudinaux (11, 12), cousus avec ce dernier, du tissu d'enveloppe de l'Airbag.

12. Système d'Airbag suivant l'une des revendications 9 et 10, caractérisé en ce que le et /ou les éléments de retenue mécaniques (18) sont cousus sur le pli de couture (13) avec les bords longitudinaux (11, 12) du tissu d'enveloppe de l'Airbag.

13. Système d'Airbag suivant l'une des revendications 9 à 12 , caractérisé en ce que l'élément de retenue (18) est réalisé en forme d'étrier ou de tôle de retenue.

14. Système d'Airbag suivant l'une des revendications 1 à 13, caractérisé en ce qu'un cordon de stabilisation (23), hautement résistant à l'usure, est prévu dans la zone du repli du tissu d'enveloppe de l'Airbag, ce cordon étant ancré par ses extrémités en saillie sur la carrosserie du véhicule.

15. Système d'Airbag suivant l'une des revendications 1 à 14, caractérisé en ce qu'un appui mécanique (25 ; 26) est conformé sur le dispositif de serrage (6) pour le composant d'Airbag (22)).

16. Système d'Airbag suivant l'une des revendications 1 à 15, caractérisé en ce que l'appui, conformé sur le dispositif de serrage (6), est réalisé sous forme d'une gaine (25) qui enveloppe le composant d'Airbag (22) incorporé.

17. Système d'Airbag suivant la revendication 1, caractérisé en ce que les moyens d'allumage pour le générateur de gaz (4) sont des 〈〈 mèches 〉〉 couvertes.
